# EUROPEAN PATENT APPLICATION

(11) **EP 2 583 910 A1**
(43) Date of publication of application: **24.04.2013**
(21) Application number: 11008481.1
(22) Date of filing: 21.10.2011
(51) Int. Cl.: B65D 75/58, B32B 7/14

(54) **Packaging with tearing aid**

(71) Applicant: Amcor Flexibles Italia S.R.L., 36030 Lugo Di Vicenza (VI) (IT)
(72) Inventor: Gruson, Geoffroy, 80090 Amiens (FR); Bertolino, Noemi, 37138 Verona (IT)
(74) Representative: Gernet, Samuel Andreas

(57) **Abstract**

Packaging (10), for example a bag or a pouch, comprising laminates of flexible materials. The packaging having a height and a width and having a tearing aid (20) in a certain height of the packaging. The tearing aid (20) stretches from one edge across at least a part of or the whole width of the packaging. The tearing aid is placed in the laminate. The laminate comprises at least 2 layers, the adjacent surfaces of the layers bonded together, with the exception of an area forming the tearing aid, within the area two layers have a reduced or no adhesion to each other and, opening the packaging, the tearing commences along the area.

## Description

The invention relates to a packaging comprising a laminate of flexible materials, the packaging having a height and a width and having a tearing aid in a certain height of the packaging and the tearing aid stretches from one edge across at least a part of or the whole width.

Packaging, for example pouches, composed of flexible laminates having a tearing aid is known in the technical field. There are existing solutions on the market such as laser scoring of one or more of the laminated film, mechanical cuts or weakening on a film to drive the tearing. Also, oriented films, like polypropylene or polyester films, oriented in machine direction may support the tearing.

Conventional raw materials having good tearing properties by their own, i.e. oPET, oPA, aluminium foils, oPP and properly extruded cPP and bPP, PE, are known. Those films or foils, once adhesively laminated together, the final laminate looses partially easy and straight tear. This could be compensated by solution such as laser scoring or mechanical cuts but these solutions are weakening the final laminate and bear the risk of damaging the functional barrier. Another way could be to use raw materials oriented in machine direction, but this limits the degrees of liberty around film formula and final laminate performance and could strongly impact the overall cost.

Even using different film layers composing a laminate through adhesive lamination and forming a pouch with the laminate having a front and a back and a tear notch in the opening area, easy tear performance and preferential direction tearing is not satisfactory and combinations of these layers result in a pouch with no easy and straight opening, unless special and expensive films are used in the laminate or extra treatment on the laminate is applied. These special raw materials also can create sides issues to machineability or other performances required.

Opening pouches actually on the market, tearing does not always commence straight, for example from one tear notch to the other. Or, with a pouch having an opening alignment on the front and back side, the tearing direction on front and back side may not run in the same direction. Such disadvantages make the access to the content in the packaging, like foodstuff, difficult and messy.

The object of the present invention is to provide a packaging comprising a laminate, said laminate comprising a tearing aid. The instant solution solves the easy and straight tear on a packaging, mainly a flexible packaging in form of a pouch or a bag, preferably for foodstuff, especially for retort food and pet food applications.

That objective is achieved by way of the invention in that the packaging comprises a laminate, the tearing aid is located in the laminate and said laminate has at least 2 layers, the adjacent surfaces of the layers bonded together, with the exception of an area forming the tearing aid, within the area two layers have a reduced or no adhesion to each other and opening the packaging the tearing commences along the area.

In an embodiment according to the instant invention, the laminate has 2 layers, the layers bonded together with the exception of an area forming the tearing aid, within the area the two layers have a reduced or no adhesion to each other and opening the packaging the tearing commences along the area.

Preferably the laminate comprises 3 layers, the adjacent surfaces of the layers bonded together, with the exception of an area forming the tearing aid, within the area two layers have a reduced or no adhesion to each other.

A preferred laminate comprises as layers a first plastic film, a metal foil and a second plastic film, the adjacent surfaces of the layers bonded together, with the exception of an area forming the tearing aid, within the area two layers have a reduced or no adhesion to each other.

The laminate may comprise at least 2 layers, having the adjacent surfaces of the layers bonded together, with the exception of an area forming the tearing aid, within the area two layers have no adhesion to each other or the area is free of adhesive.

Alternatively, the laminate comprises at least 2 layers, the adjacent surfaces of the layers bonded together, with the exception of an area forming the tearing aid, within the area two layers have reduced or no adhesion to each other and the area comprises a release agent, an agent having non-sticking properties and showing reduced adhesion strength or an agent reducing adhesion.

In particular, the present invention provides a laminated film that ensures a propagation of the tear along the area and in practice a propagation of the tear along the area arranged across the pouch or bag.

Useful laminates contain at least two plastic films or at least one plastic film and at least one foil. Said one or more plastic films comprising polyamides, polyesters, i.e. PET, cPET, pPET, PETG, polyolefines, for example polyethylene (PE) or polypropylene (PP), i.e. cPP, bPP. For an improved tear PE, having a high tear resistance, is preferred. For easy tear PP, having an easy tear performance, is preferred. The plastic films can be non-oriented, axially oriented or biaxially oriented. Regarding the orientation of the plastic films, usually plastic films have a natural tearing direction, especially showing a straight tear. It is advantageous to apply the plastic films in the laminate having their natural tearing direction in direction of the tearing aid or area. To control the tear direction, if a natural tear direction in a none-oriented film is not sufficient, an orientation of the films can apply. An axial orientation in machine direction (MD) or transversal direction (TD) or in both directions (biaxially oriented) is possible. In many cases machine direction is the preferred orientation direction. It is preferred, having a favorable tearing direction in at least one of the plastic films of the laminate and said tearing direction runs in parallel to the tearing aid or area in the laminate.

Usually plastic films have a thickness of 6 to 200 µm, preferably from 12 to 100 µm. Laminates comprising 2 layers may contain as a first layer a first plastic film having a thickness of 7 to 36 µm and as a second layer a plastic film having a thickness of 20 to 200 µm, preferably from 45 to 100 µm. If a laminate comprising more than 2 layers, it may contain as a first layer a first plastic film having a thickness of 7 to 36 µm and as second layer a layering of 2, 3 or more plastic films, each having a thickness of 20 to 200 µm, preferably from 45 to 100 µm.

The laminates may contain metal foils, for example aluminium foils and preferably aluminium foils made of aluminium 99,9 and higher or aluminium alloys, like alloys selected from the groups AA 1 xxx, for example AA1200, or AA 8xxx, for example AA8079. Typically the thicknesses for metal foils, like aluminium foils, range from 6 to 50 µm and preferably from 7 to 30 µm.

In the laminate the films, the film and foil or the films and foil are stacked, basically a film is overlying an underlying film or foil. In said stack adjacent surfaces of the films or film and foil or foils are bonded together. To create bond strength between two films or between a film and a foil or between films and foil, adhesives can be used. Samples of useful adhesives include solvent less adhesives, water based adhesives or solvent based adhesives, polyurethane-type adhesives, olefinic resins, such as modified polypropylenes or ethylen/propylene copolymers, vinylidenchloride-type adhesives or for laminates subjected to high temperature retort sterilization at more than 120°C isocyanat-type adhesives. The suitable amount of adhesive is from 0.1 to 10 g/m², preferably from 1.0 to 5.0 g/m². In an alternative embodiment, films can be bonded by extrusion lamination or by extrusion lamination on a stripped repulsive coating of aluminium foil. As an example for extrusion lamination blown film extrusion can be mentioned.

A favored laminate comprises a first plastic film, a metal foil and a second plastic film. For example, the laminate comprises as layers a polyester film, a metal foil and a polypropylene film. Preferred laminate comprises a layering in the sequence polyester as the first plastic film, adhesive, aluminium foil, adhesive, polypropylene as the second plastic film. Very useful is a laminate comprising a layering in the sequence of polyester in a thickness of 6 to 36 µm, adhesive in an amount of 1 to 10 g/m², aluminium foil in a thickness of 6.3 to 30 µm, adhesive in an amount of 1 to 10 g/m², polypropylene in a thickness of 30 to 200 µm. The polyester plastic film can be non-oriented, axially or biaxially oriented. The polypropylene plastic film is preferably axially or biaxially oriented. Preferably the natural tearing direction for a straight tear is observed and the films are arranged in the laminate having the tearing direction and the tearing aid running in parallel. Preferably the natural tearing direction of the polypropylene film is observed and the polypropylene film is arranged in the laminate having the tearing direction running in parallel to the tearing aid.

Sealing layers, like lacquers or sealing films may be applied on at least one of the outsides of the laminate. Sealing lacquers are applied preferably on the side of the laminate facing on a packaging the content or inside of said packaging. Alternatively, the layer of the laminate facing on a packaging the content or inside may have sealing properties. On the laminate prints, counter-prints, protecting lacquers or additional films may be applied, preferably applied on the side of the laminate facing the outside of a packaging manufactured from said laminate. In an other embodiment, applied on the side of the laminate facing the outside of a packaging, a layer of paper, occasionally printed or colored, might be adhesively applied to the laminate.

The laminate described is useful to manufacture packaging forms, like pouches or bags. In most cases pouches contain two sidewalls of the laminate and four or more sealing seams. One sealing seam is welding the pouch at bottom, one sealing seam is closing the pouch at the top end and two sealing seams, each forming a side seam from bottom to top end. It is possible to form the bottom by 2 or several sealing seams, for example forming a bottom part for a stand-up pouch. In an alternative embodiment, the laminate is folded to a tube and the edges of the laminate along the length of the tube are welded together, sealing seams perpendicular or about perpendicular to the welding seam of the tube, seal the tube at bottom and at top end form the pouch.

In accordance to the instant invention, pouches have a tearing aid. The tearing aid could be integrated in at least one side wall of such pouch. In a pouch having two sidewalls the tearing aid is located in one sidewall or preferably in both sidewalls, expanding over the whole sidewall or a part of the sidewall or the sidewalls. If both or all sidewalls show a tearing aid area, advantageously the tearing aid areas are arranged on the same height relating to the sidewalls of the packaging. The tearing aid is preferably arranged in the upper half of a pouch and particularly in the proximate vicinity of the top end seam. The tearing aid may stretch over the whole width of the pouch or at least a part, for example more than 50% and preferably more than 70% of the width of the pouch.

The tearing aid is formed by an area in the laminate. In said area the laminate having at least 2 layers, the layers bonded together with the exception of the area forming the tearing aid, within the area two layers have a reduced or no adhesion to each other. The width of the area depends on the width of the pouch and stretches between the sealing seams over the whole width between the sealing seems of the pouch or at least a part, for example more than 50% and preferably more than 70% of the width between the sealing seems of the pouch. For example the height of the area is from 2 to 10 mm, preferably from 3 to 7 mm. The area is characterized by reduced or no adhesion or bond strength between two layers of the laminate. In a laminate comprising three layers, like a first plastic layer, a metal layer and a second plastic layer, the area preferably expands between the metal layer and the second plastic layer. In a packaging the second plastic layer is the preferred layer facing the inside of the packaging. Preferably the area expands linear, occasionally curved, and a propagation of the tear commences along the area ripping the laminate and opening the packaging.

A possibility to produce laminates containing the areas of no adhesion is to apply an adhesive on a base layer, i.e. the metal foil or the first or second plastic film, and by creating voids in the adhesive layer. Such voids can be obtained by applying the adhesive by printing a pattern of adhesive in a printing device on the base layer. In register the areas without adhesive, leaving the surface of the base layer blank, are obtained. Following the application of the adhesive on the base layer a covering layer, i.e. either the metal foil or the first or second plastic film, is continuously supplied and adheres to the surface of the underlying layer with the exception of the voids where no adhesive has been printed. In an alternative embodiment, the adhesive is fully covering the base layer and, for example in a printing device, a pattern of a release agent, an agent having non-sticking properties and showing reduced adhesion strength or another agent reducing adhesion is added in register, either on top of the adhesive or applied on the covering layer, which is added continuously to the base layer. Examples of release agents, agents having non-sticking properties and showing reduced adhesion strength or other agents reducing adhesion are nitrocellulosic varnishes and waxes and/or polyamide varnishes and waxes or vinylic varnishes. Preferably the agents are in form of a lacquer and such lacquer can be applied in register as a print in a printing device. The print of the lacquer forms or limits the tearing aid area.

In an easy tear solution it is preferred having the area of no or reduced adhesion between metal foil and second plastic film, for example between an aluminium foil and a PP-foil. For solutions showing more tear resistance, the area of no or reduced adhesion could be located between metal foil and first plastic film, for example an aluminium foil and a PET-film.

In case a 3-layer laminate is wanted, in a first step, the metal foil, preferably an aluminium foil, is backed with the first plastic film, preferably a polyester film. In a second step, on the free surface of the aluminium foil, the adhesive is continuously applied in a printing device. The adhesive covers most of the surface, except leaving blank in register areas basically expanding over the whole width or parts of the width between proposed sealing seams and over 2 to 10 mm in height. In a third step, the second plastic film, preferably a polypropylene film, is continuously laminated. Alternatively, the metal foil is printed with the adhesive, the second plastic film laminated next and afterwards the first plastic film is added to the free side of the metal foil. Or, the adhesive is printed on the one surface of the second plastic film and subsequently the metal foil is adhesively bonded to the second plastic film. Next, the first plastic film is adhesively joined to the free side of the metal foil.

Alternatively, getting a 3-layer laminate, in a first step, the metal foil is backed with the first plastic film. In a second step, on the free surface of the metal foil, the adhesive is continuously applied. The adhesive covers the whole surface. Next, for example in a printing device, a pattern of a release agent, an agent having non-sticking properties and showing reduced adhesion strength or an agent reducing adhesion is printed in register forming the area. In a third step, the second plastic film, preferably a polypropylene film, is continuously laminated onto the layering. Alternatively, it is possible to print the agent on either the second plastic film, on the metal foil or on the adhesive and subsequently to laminate the residue layer. As examples, laminates may show sequences in layering comprising i) first plastic film, metal foil, adhesive, agent, second plastic film or ii) first plastic film, metal foil, agent, adhesive, second plastic film.

The laminate prepared in the way as described is cut in sheets and the sheets converted to pouches or the laminate is preformed to a continuous row of pouches. The pouches are filled with the content and a final sealing seam may close each pouch. Sealing seams may form the edges of the pouch. Typically, a single seam or two sealing seams expand along the height of the pouch. At the bottom end and at the top end of the pouch is sealed. The area forming the tearing aid is preferably located in the vicinity of the top end and runs parallel or almost parallel or in an angle to the top end sealing seam. The area basically expands between the sealing seams. To open a pouch, the sealing seam has to be broken first and subsequently the tear progresses along the tearing aid. Therefore at the height of the area a notch or notches may be provided at the sealing seams. The notches allow an easy tearing through the sealing seam and, once the sealing seam is broken, tearing progresses along the area until the pouch is opened to the length wanted. To equalize imprecision of the packaging machinery, advantageously the area forming the tearing aid can eventually expand slightly into the sealing seam. Accordingly, the notch is placed at the edge of the sealing seam in the vicinity of, but not directly in the area forming the tearing aid.

Having no or a reduced bond in a certain area between the metal foil and the second plastic film, a tear will follow the orientation of the second plastic film. For example a second plastic film of PP, which can be a standard cPP or bPP sealant film, properly extruded, has the ability to tear in one direction only. By selecting surfaces having adhesive applied and an adhesive-free area the area for a straight tear is formed.

In particular, the instant flexible laminates are uninterrupted and packaging thereof shows uninterrupted faces, free of any cuts or voids in the films or foils circumscribed by or within the sealing seams. The inside of packaging made from the laminates usually is sealed tight and not in contact with the environment until tearing open along the tearing aid area. Packages according to the instant invention, like pouches, bags, sachets and the like, made of flexible materials, can have an extension in width of preferably 50 to 500 mm and in height of preferably 50 to 500 mm. Bags and pouches, smaller, for example from 10 mm, or larger, for example to 1000 mm, in width and height are possible to manufacture. The practicality depends on the content and handling. The most common use of such packaging is for consumer goods, like goods in dry or moist flakey, powdery or chunky form or in viscous or fluid form. Typical goods are foodstuffs, food supplements or pharmaceuticals for humans and animals or any other consumer goods. If needed, the inside of the packaging can have a non-sticking liner, for example comprising a silicone- or fluoro-compound, allowing a clean and easy pouring of the content.

Further advantages, features and details of the invention are revealed in the following description of preferred exemplified embodiments and with the aid of the drawings which show schematically in
- Fig. 1: a front view of a pouch made of the laminate with a tearing aid.
- Fig. 2: a front view of a pouch made of the laminate with a tearing aid.
- Fig. 3: a cross section along line I - I through the laminate having an area without an adhesive.
- Fig. 4: a cross section along line I - I through the laminate having an area of a release agent applied between the adhesive and the film.

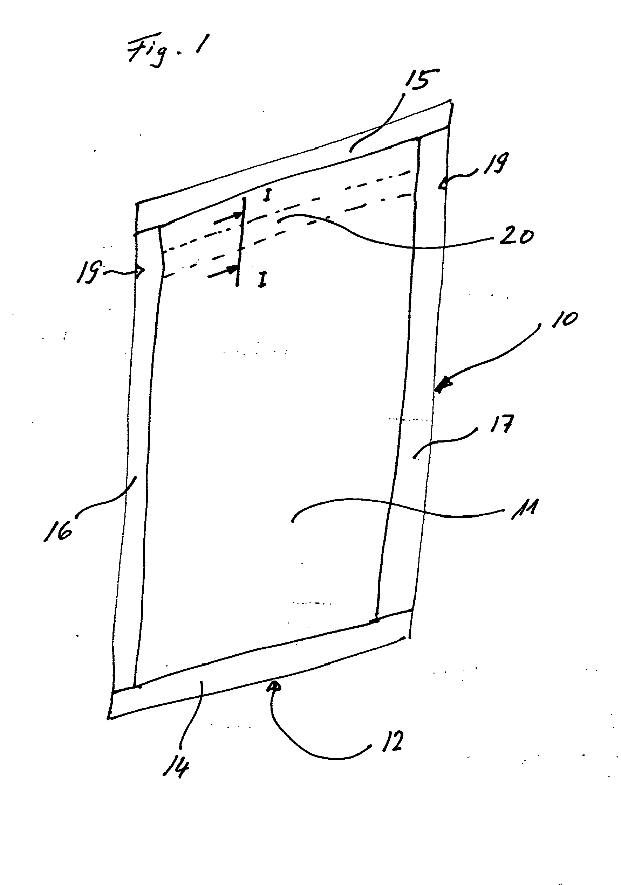

Fig 1 shows a pouch 10 consisting of a front face 11 and a rear face 12. Pouch 10 has a sealing seam at the bottom 14 and a sealing seam on the top end 15. Along the height of the pouch 10 sealing seams 16, 17 are arranged. Notches 19 are shown in sealing seams 16, 17. At the height of notch 19 the area forming the tearing aid 20 runs parallel to sealing seam 15. Area 20 expands trough front face 11 or rear face 12 or through front face 11 and rear face 12 between sealing seams 16 and 17.

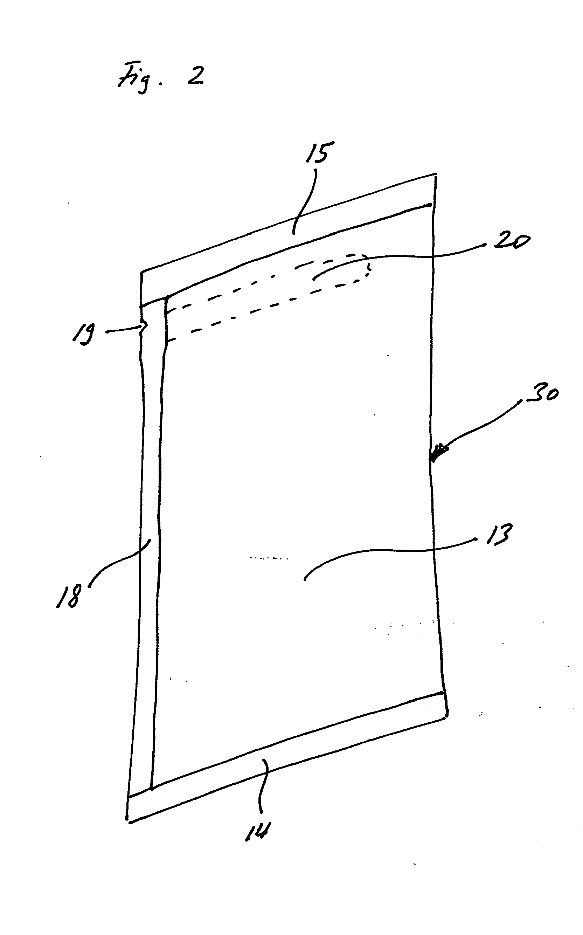

Fig 2 shows a pouch 30 consisting of a tube-like face 13. Pouch 30 has a sealing seam at the bottom 14 and a sealing seam on the top end 15. Along the height of the pouch 10 sealing seam 18 is arranged. A notch 19 is shown in sealing seam 18. At the height of notch 19 the area forming the tearing aid 20 runs parallel to sealing seam 15. Area forming the tearing aid 20 expands between sealing seam 18 and about three quarter of the width of pouch 30. Alternatively (not shown), the area forming the tearing aid 20 expands from seam 18 over the whole width of face 13 or the circumference of pouch 30.

In the embodiments according to figures 1 or 2 sealing seam 15 and area forming tearing aid 20 have not necessarily to run in parallel. Depending on the design, sealing seam 15 may be arranged in an angle other than perpendicular regarding seams 16, 17 or 18. The same applies for area forming the tearing aid 20, running in an angle other than perpendicular regarding seams 16, 17 or 18.

Sealing seams 14, 15, 16 and 17 sealing faces 11 and 12 or sealing seams 14, 15 and 18 forming pouch 10, 30 are for example heat seals or adhesive seals. Preferably the innermost layer of the laminate has heat sealing properties and the laminates can be sealed against each other. It is also possible to use a sealing lacquer or an adhesive to form the seams of the pouch.

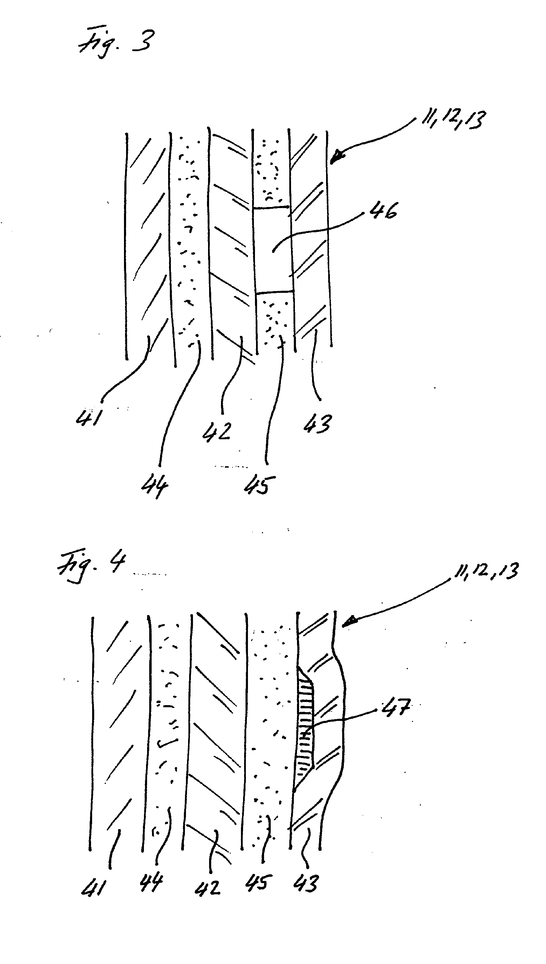

Fig. 3 shows a cross section along line I - I in Fig. 1 through a laminate forming face 11 or 12 or face 13 in Fig. 2. As an example, the laminate comprises tree layers, a first plastic film 41, a metal foil 42 and a second plastic film 43. Between the first plastic film 41 and the metal foil 42 an adhesive layer 44 is shown. Between the metal foil 42 and the second plastic film adhesive layer 45 is shown. The adhesive layer 45 is interrupted over a certain length in height of face 11, 12 or 13, for example over a height of 2 to 10 mm, forming void 46. Void 46 forms the area having no adhesive bonding between foil 42 and film 45. Void 46 may expand in width over the width of the pouch 10, 30 or over a part of the width of pouch 10, 30, forming the area of the tearing aid 20.

Fig. 4 shows a cross section along line I - I in Fig. 1 through a laminate forming face 11 or 12 or face 13 in Fig. 2. As an example, the laminate comprises tree layers, a first plastic film 41, a metal foil 42 and a second plastic film 43. Between the first plastic film 41 and the metal foil 42 an adhesive layer 44 is shown. Between metal foil 42 and second plastic film 43 adhesive layer 45 is shown. As an alternative, a layer 47 of a release agent, an agent having non-sticking properties and showing reduced adhesion strength or an agent reducing adhesion is placed between adhesive layer 45 and second plastic film 43. The adhesive bond between second plastic film 46 and metal foil 42 is interrupted or reduced by said agent forming layer 47 over the length in height of the agent, for example over a height of 2 to 10 mm. Layer 47 forms the area with no adhesive bond or reduced adhesive bond between foil 42 and film 45. Layer 47 may expand in width over the width of the pouch 10, 30 or over a part of the width of pouch 10, 30, forming area of tearing aid 20.

Alternatively (not shown), void 46 or layer 47 of a release agent, an agent having non-sticking properties and showing reduced adhesion strength or other an agent reducing adhesion can be placed between metal foil 42 and adhesive 45 or may be placed between first plastic film 41 and metal foil 42 on either side of the adhesive 44. In a further embodiment, voids or layers of a release agent, an agent having non-sticking properties and showing reduced adhesion strength or other an agent reducing adhesion can be placed between metal foil 42 and second plastic film 43 on either side of adhesive 45 and between first plastic film 41 and metal foil 42 on either side of the adhesive 44. Instead of using an adhesive bond between the films, the films can be manufactured by extrusion lamination.

The instant invention helps to avoid four limitations observed on actual solutions. In contrary to laser scoring or mechanical cuts, it is possible to hide the instant tearing aid in the laminate, or to reduce its visibility all the way to invisibility. The appearance of the packaging and of any prints visible on the outside improves substantially. The instant tearing aid does not affect overall laminate performance. Thus in contrary to machine direction oriented films. The instant tearing aid is not affecting the product security, also in contrary to laser scoring or mechanical cuts. Finally, the instant tearing aid is not adding important extra cost due to additional process or expensive raw materials.

Opening a pouch according to the instant invention, the tearing starts preferably at a notch or small cut in the sealing seam. From the notch the tearing commences precisely along the area forming the tearing aid. Depending on the lay-out of the area the tearing commences in horizontal direction or in certain cases in vertical direction or in an angle to a sealing seam, across the pouch. Actual performance is a consequence of the combination of the raw material orientations combined through adhesive lamination. The instant invention offers a possibility to combine raw material performance and adhesive lamination process in a way to reach easy and straight tear properties of the final laminate and therefore on the final pouch. With the delamination effect in the tearing aid area higher advantage can be taken by the properties - either tear easiness or resistance - of the second plastic film, which is the sealant layer and in most cases the thickest layer in the structure. The invention provides a solution of the easy and tear opening of a multilayer laminate pouch with no need of special raw materials or additional treatments to the laminate, but just through the adhesive distribution or bonding performance control in the easy opening area. With no or reduced bonding between one or more layers in the easy opening or tearing aid area, it is possible to leverage the easy and straight tear of the single plastic films, metal foils and possible paper layers forming the laminate. In these areas, raw material orientation is driving the tearing. The instant invention offers a solution using the advantageous performance of each raw material without weakening the final laminate by selecting areas where one of the films drives the tearing and avoiding the detrimental effect of the adhesive lamination in that area.

## Claims

1. Packaging comprising a laminate of flexible materials, the packaging having a height and a width and having a tearing aid in a certain height of the packaging and the tearing aid stretches from one edge across at least a part of or the whole width, **characterized in that** the tearing aid is located in the laminate and the laminate comprises at least 2 layers, the adjacent surfaces of the layers bonded together, with the exception of an area forming the tearing aid, within the area two layers have a reduced or no adhesion to each other and, opening the packaging, the tearing commences along the area.

2. Packaging according to claim 1, **characterized in that** the laminate comprises 2 layers, the adjacent surfaces of the layers bonded together, with the exception of an area forming the tearing aid, within the area two layers have a reduced or no adhesion to each other.

3. Packaging according to claim 1, **characterized in that** the laminate comprises 3 layers, the adjacent surfaces of the layers bonded together, with the exception of an area forming the tearing aid, within the area two layers have a reduced or no adhesion to each other.

4. Packaging according to claim 3, **characterized in that** the laminate comprises as layers a first plastic film, a metal foil and a second plastic film, the adjacent surfaces of the layers bonded together, with the exception of an area forming the tearing aid, within the area two layers have a reduced or no adhesion to each other.

5. Packaging according to claim 4, **characterized in that** the laminate comprises as layers a polyester film, a metal foil and a polypropylene film, the adjacent surfaces of the layers bonded together, with the exception of an area forming the tearing aid, within the area two layers have a reduced or no adhesion to each other.

6. Packaging according to claim 1, **characterized in that** the laminate comprises at least 2 layers, the adjacent surfaces of the layers bonded together, with the exception of an area forming the tearing aid, within the area two layers have no adhesion to each other and the area is free of adhesives.

7. Packaging according to claim 1, **characterized in that** the laminate comprises at least 2 layers, the adjacent surfaces of the layers bonded together, with the exception of an area forming the tearing aid, within the area two layers have no adhesion to each other and the area comprises a release agent, an agent having non-sticking properties and showing reduced adhesion strength or an agent reducing adhesion.

8. Packaging according to claim 1, **characterized in that** the area forming the tearing aid, expands over the whole widths or partially over 50% of the width and over a height of 2 to 10 mm along the height.

9. Packaging according to claim 1 **characterized in that** at least one of the layers is a plastic film having a tearing direction and said tearing direction runs in parallel to the tearing aid in the laminate.
